Europäisches Patentamt

European Patent Office

Office européen des brevets

(19)

(11) Veröffentlichungsnummer: **0 265 998**
**A2**

(12) **EUROPÄISCHE PATENTANMELDUNG**

(21) Anmeldenummer: 87202020.1

(22) Anmeldetag: 20.10.87

(51) Int. Cl.⁴: **G02B 6/30**

(30) Priorität: 23.10.86 DE 3636091

(43) Veröffentlichungstag der Anmeldung:
04.05.88 Patentblatt 88/18

(84) Benannte Vertragsstaaten:
**DE FR GB**

(71) Anmelder: **Philips Patentverwaltung GmbH**
**Wendenstrasse 35 Postfach 10 51 49**
**D-2000 Hamburg 1(DE)**

(84) **DE**

(71) Anmelder: **N.V. Philips' Gloeilampenfabrieken**
**Groenewoudseweg 1**
**NL-5621 BA Eindhoven(NL)**

(84) **FR GB**

(72) Erfinder: **Mannschke, Lothar, Dipl.-Ing.**
**Haidbuckel 23**
**D-8501 Eckenthal-Eckenhaid(DE)**

(74) Vertreter: Peuckert, Hermann, Dipl.-Ing. et al
**Philips Patentverwaltung GmbH**
**Wendenstrasse 35 Postfach 10 51 49**
**D-2000 Hamburg 1(DE)**

(54) **Lichtwellenleiteranschluss an optische IC.**

(57) Zur Vermeidung verfahrenstechnischer und optischer Probleme beim Anschluß von Lichtwellenleitern mit an den Rand von IC herangeführten Bahnen wird die Anschlußstelle von der Kante weg in die Seitenfläche des optischen IC verlegt. Dort tritt ein innerhalb des IC verlaufender optischer Leiter aus, der an die oberflächigen Leiter durch berkopplung angeschlossen ist.

EP 0 265 998 A2

## Lichtwellenleiteranschluß an optische IC

Die Erfindung betrifft eine Einrichtung zum optischen Anschluß eines Lichtwellenleiters (LWL) an einen in der Oberfläche eines optischen IC liegenden Streifenwellenleiter (StWl). Solche Einrichtungen werden in integriert optischen Sensor-Systemen und integriert optischen Bauteilen für die optische Nachrichtentechnik benötigt.

Systeme der optischen Nachrichtenübertragungstechnik werden zunehmend auf integrierten optischen Bauelementen untergebracht (DE-OS 32 30 657). Das in solchen Systemen zu transportierende und zu verarbeitende Licht wird in Streifenwellenleitern geführt, die beispielsweise durch Jonenaustausch in der Oberfläche eines Glaskörpers untergebracht sind. Wenn die Enden der Streifenwellenleiter an die Kanten der optischen IC's herangeführt werden, treten verfahrenstechnische und optische Probleme zur Ankopplung von Lichtwellenleitern auf.

Der Erfindung liegt die Aufgabe zugrunde, eine einfache und optisch möglichst verlustarme Einrichtung zum optischen Anschluß von Lichtwellenleitern an Streifenwellenleiter zu schaffen, die sich auch in einer rationellen Massenfertigung zuverlässig und genau herstellen läßt.

Diese Aufgabe wird bei einer Einrichtung der eingangs genannten Art dadurch gelöst, daß der Lichtwellenleiter mit einem ersten Streifenwellenleiter stumpf verbunden ist, der unterhalb der Oberfläche des optischen IC's angeordnet ist, daß dieser erste Streifenwellenleiter in wenigstens einem Bereich parallel zu einem in der Oberfläche des optischen IC angeordneten zweiten Streifenwellenleiter geführt ist und daß zwischen dem ersten und dem in der Oberfläche liegenden zweiten Streifenwellenleiter ein Abstand vorgesehen ist, bei dem zwischen beiden Streifenwellenleitern eine Überkopplung der Lichtwellen stattfindet.

Die Erfindung geht von den Erkenntnissen des Aufsatzes in "Elektrisches Nachrichtenwesen", Band 59, Nr. 4, 1985, Seiten 380 bis 384 zu Überkopplungen aus und berücksichtigt ferner Kopplung und Überkopplung bei sich durchdringenden oder berührenden Bahnen (ECIO-85, Post deadline paper P3, Berlin 6.-8./5.85 "Transfer Characteristics Calculations of a Planar IO Three-Port Coupler"). Die Herstellung unterhalb der Oberfläche angeordneter Streifenwellenleiter ist beispielsweise in Applied Optics 1. Juni 1984 Volume 23 Nr. 11, Seite 1745 bis 1748 beschrieben. Durch ein Ionenaustauschverfahren werden feldunterstützt in einem ersten Schritt z.B. Cäsium-Ionen in einem begrenzten Bereich in die Oberfläche eines geeigneten Substrates eingebracht. Hierdurch wird ein in der Oberfläche des Substrates liegender Streifenwellenleiter erzeugt. In einem weiteren Schritt wird feldunterstützt die Oberfläche des Streifenwellenleiters mit geeigneten Ionen, z.B. Natrium-Ionen, beaufschlagt, wodurch der mit den Cäsium-Ionen gebildete Streifenwellenleiter in das Substrat einwandert und ein im Innern des Substrats liegender Streifenwellenleiter erzeugt wird. In einem dritten Schritt wird, wie eingangs beschrieben, ein Streifenwellenleiter an der Oberfläche des Substrats erzeugt. Durch die Erfindung wird eine Austrittstelle des Streifenwellenleiters geschaffen, die von der Kante weg in die Seitenfläche des optischen IC verlegt ist, an der sich die Lichtwellenleiter der Übertragungsstrecke mit einfacheren Verfahren ankoppeln lassen.

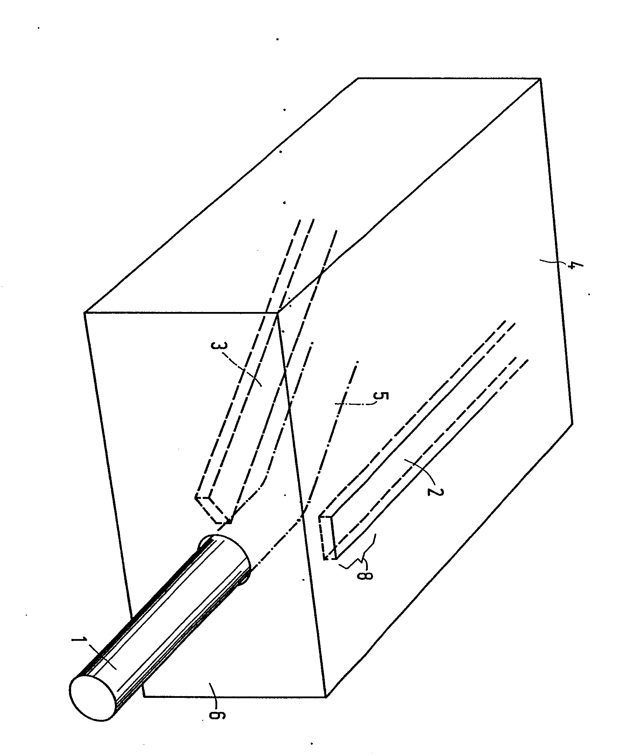

Die Erfindung wird mit weiteren, in den Unteransprüchen angegebenen vorteilhaften Ausgestaltungen anhand des in der Zeichnung schematisch dargestellten Ausführungsbeispieles erläutert und beschrieben.

Ein Lichtwellenleiter 1 soll an die Streifenwellenleiter 2 und 3 eines optischen IC 4 angekoppelt werden. Der Koppelbereich ist vergrößert und ausschnittsweise in dreidimensionaler Ansicht mit einem Aufbruch im Bereich der Koppelstellen herausgezeichnet.

Auf den gegenüberliegenden Oberflächen des optischen IC's 4 befinden sich Streifenwellenleiter 2 und 3. Parallel zu dem Koppelbereich der Streifenwellenleiter ist der erste strichpunktiert gezeichnete Streifenwellenleiter 5 innerhalb des optischen IC's 4 angeordnet und endet stumpf auf einer Seitenfläche 6. An seinem Ende ist der Lichtwellenleiter 1, ggf. durch Klebverbindung mit Hilfe eines nicht dargestellten Mikromanipulators, verbunden.

Im Bereich 8 laufen der erste Streifenwellenleiter 5 und der zweite Streifenwellenleiter 2 mit einem vorgegebenen Abstand solange benachbart zueinander, daß eine gewünschte Überkopplung stattfindet

In weiterer Ausgestaltung wird der Streifenwellenleiter 5 entlang einer Bahn geführt, die von der Bahn des zweiten Streifenwellenleiters 2 abweicht und benachbart zu einem dritten, gestrichelt dargestellten Streifenwellenleiter 3 liegt. Dadurch entsteht ein neuer Überkopplungsbereich zwischen dem ersten Streifenwellenleiter und dem dritten Streifenwellenleiter 3 im weiteren Verlauf seiner Bahn im IC..

Die Erfindung ist gleichermaßen für den Anschluß von Lichtwellenleitern an optische IC's mit einer oder mehreren Ebenen (Multilayer) ausgestaltbar.

## Ansprüche

1. Einrichtung zum optischen Anschluß eines Lichtwellenleiters (LWL) an einen in der Oberfläche eines optischen IC liegenden Streifenwellenleiters (StWl), dadurch gekennzeichnet, daß der Lichtwellenleiter mit einem ersten Streifenwellenleiter stumpf verbunden ist, der unterhalb der Oberfläche des optischen IC's angeordnet ist, daß dieser erste Streifenwellenleiter wenigstens in einem Bereich parallel zu einem in der Oberfläche des optischen IC angeordneten zweiten Streifenwellenleiters geführt ist und daß zwischen dem ersten und dem in der Oberfläche liegenden zweiten Streifenwellenleiter ein Abstand vorgesehen ist, bei dem zwischen beiden Streifen-wellenleitern eine Überkopplung der Lichtwellen stattfindet.

2. Einrichtung nach Anspruch 1, dadurch gekennzeichnet, daß der erste und der in der Oberfläche geführte zweite Streifenwellenleiter sich gegenseitig berühren.

3. Einrichtung nach Anspruch 1, dadurch gekennzeichnet daß der erste und der in der Oberfläche geführte zweite Streifenwellenleiter sich teilweise durchdringen.

4. Einrichtung nach Anspruch 1, 2 oder 3, dadurch gekenn-zeichnet, daß der erste Streifenwellenleiter an einen Rand des optischen IC herausgeführt ist, an dem Befestigungsmittel für Lichtwellenleiter vorgesehen sind.

5. Einrichtung nach Anspruch 1, dadurch gekennzeichnet, daß der erste Streifenwellenleiter an verschiedenen Stellen zu weiteren Streifenwellenleitern parallel geführt ist.

6. Einrichtung nach Anspruch 5, dadurch gekennzeichnet, daß die weiteren Streifenwellenleiter in verschiedenen Ebenen angeordnet sind.

7. Einrichtung nach Anspruch 5, dadurch gekennzeichnet, daß der erste Streifenwellenleiter zu Streifenwellenleitern parallel geführt ist, die auf gegenüberliegenden Oberflächen angeordnet sind.